(19) Europäisches Patentamt
European Patent Office
Office européen des brevets

(11) **EP 4 321 845 A1**

(12) **EUROPEAN PATENT APPLICATION**

(43) Date of publication:
**14.02.2024 Bulletin 2024/07**

(21) Application number: **23189819.8**

(22) Date of filing: **04.08.2023**

(51) International Patent Classification (IPC):
**G01F 1/002** (2022.01)      **G01F 1/708** (2022.01)
**G01F 1/712** (2006.01)      **E03F 7/00** (2006.01)
**F17D 5/00** (2006.01)      **G01F 15/06** (2022.01)
**G01M 1/00** (2006.01)

(52) Cooperative Patent Classification (CPC):
**G01F 1/708; E03F 7/00; G01F 1/002; G01F 1/712;**
F17D 5/00; G01F 15/06; G01M 1/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.08.2022 IL 29543222**

(71) Applicant: **Kando Environmental Services Ltd.
4486200 Tsur Yigal (IL)**

(72) Inventors:
• **GILEAD BAIBICH, Ricardo
DN Menashe (IL)**
• **MALUL, Matan Shay
Kiryat Ata (IL)**

(74) Representative: **Vossius & Partner
Patentanwälte Rechtsanwälte mbB
Siebertstraße 3
81675 München (DE)**

(54) **DETERMINING TIME OF TRAVERSAL OF WASTEWATER WITHIN A WASTEWATER TRANSPORT INFRASTRUCTURE**

(57) There is provided a system of measuring a time of fluid traversal of an infrastructure, the system comprising a processing circuitry configured to: receive one or more first fluid characteristics associated with the fluid traversing a first infrastructure location at a first timestamp; identify a first fluid characteristic signal from the first fluid characteristics, receive one or more second fluid characteristics associated with the fluid traversing a second infrastructure location at a second timestamp; identify a second fluid characteristic signal from the second fluid characteristics; and responsive to correlation of the second fluid characteristic signal with the first fluid characteristic signal: calculate a time of traversal, in accordance with the first timestamp, the second timestamp, and a distance between the first infrastructure location and the second infrastructure location.

Fig. 1

EP 4 321 845 A1

**Description**

**TECHNICAL FIELD**

The presently disclosed subject matter relates to wastewater transport systems, and in particular to monitoring and maintaining such systems.

**BACKGROUND**

Problems of implementation in systems for determining time-of-traversal in wastewater transport systems have been recognized in the conventional art and various techniques have been developed to provide solutions.

**GENERAL DESCRIPTION**

According to one aspect of the presently disclosed subject matter there is provided a computer system of measuring a time of fluid traversal of an infrastructure, the system comprising a processing circuitry comprising a processor and memory, and being configured to:

a) receive first data indicative of one or more first fluid characteristics associated with the fluid traversing a first infrastructure location at a first timestamp;

b) identify a first fluid characteristic signal from, at least, the first fluid characteristics,

c) receive second data indicative of one or more second fluid characteristics associated with the fluid traversing a second infrastructure location at a second timestamp;

d) identify a second fluid characteristic signal from, at least, the second fluid characteristics;

e) responsive to correlation of the second fluid characteristic signal with the first fluid characteristic signal: calculate a time of traversal, in accordance with, at least: the first timestamp, the second timestamp, and a distance between the first infrastructure location and the second infrastructure location.

In addition to the above features, the system according to this aspect of the presently disclosed subject matter can comprise one or more of features (i) to (viii) listed below, in any desired combination or permutation which is technically possible:

(i) the one or more of the first fluid characteristics are derivative of data from a sensor in contact with the fluid
(ii) the one or more of the first fluid characteristics are derivative of data from a non-contact sensor.
(iii) the one or more of the first fluid characteristics are derivative of a machine learning classification of a spectral emission signature of the fluid.
(iv) the one or more of the first fluid characteristics are derivative of a machine learning regression of a spectral emission signature of the fluid.
(v) the identifying the first fluid characteristic signal comprises determining that one or more of the first fluid characteristics meets a respective value.
(vi) at least one respective value is a boolean indicator of a fluid characteristic.
(vii) at least one respective value is a respective fluid characteristic threshold.
(viii) the identifying the first fluid characteristic signal comprises detecting that a rate of change of a series of received values of a fluid characteristic, wherein the series includes one of the first fluid characteristics, meets a fluid characteristic change rate threshold.

According to another aspect of the presently disclosed subject matter there is provided a computer-implemented method of measuring a time of fluid traversal of an infrastructure, the method comprising:

a) receiving first data indicative of one or more first fluid characteristics associated with the fluid traversing a first infrastructure location at a first timestamp;

b) identifying a first fluid characteristic signal from, at least, the first fluid characteristics,

c) receiving second data indicative of one or more second fluid characteristics associated with the fluid traversing a second infrastructure location at a second timestamp;

d) identifying a second fluid characteristic signal from, at least, the second fluid characteristics;

e) responsive to correlation of the second fluid characteristic signal with the first fluid characteristic signal: calculating a time of traversal, in accordance with, at least: the first timestamp, the second timestamp, and a distance between the first infrastructure location and the second infrastructure location.

This aspect of the disclosed subject matter can further optionally comprise one or more of features (i) to (viii) listed above with respect to the system, mutatis mutandis, in any desired combination or permutation which is technically possible.

According to another aspect of the presently disclosed subject matter there is provided a computer program product comprising a computer readable non-transitory storage medium containing program instructions, which program instructions when read by a processor, cause the processing circuitry to perform a method of measuring a time of fluid traversal of an infrastructure, the method comprising:

a) receiving first data indicative of one or more first fluid characteristics associated with the fluid traversing a first infrastructure location at a first timestamp;

b) identifying a first fluid characteristic signal from, at least, the first fluid characteristics,

c) receiving second data indicative of one or more second fluid characteristics associated with the fluid traversing a second infrastructure location at a second timestamp;

d) identifying a second fluid characteristic signal from, at least, the second fluid characteristics;

e) responsive to correlation of the second fluid characteristic signal with the first fluid characteristic signal: calculating a time of traversal, in accordance with, at least: the first timestamp, the second timestamp, and a distance between the first infrastructure location and the second infrastructure location.

This aspect of the disclosed subject matter can further optionally comprise one or more of features (i) to (viii) listed above with respect to the system, mutatis mutandis, in any desired combination or permutation which is technically possible.

According to another aspect of the presently disclosed subject matter there is provided a computer system of determining a metric of obstruction of a series of infrastructure segments transporting a fluid, the series comprising one or more segments, the system comprising a processing circuitry comprising a processor and memory, the processing circuitry being configured to:

a) obtain:

a. data informative of a fluid depth in a segment of the series of infrastructure segments, and

b. data informative of a time-of-traversal of the fluid through the series of segments; and

b) calculate the metric of obstruction in accordance with, at least:

a. the obtained fluid depth,
b. the obtained time-of-traversal, and
c. a total length of the series of segments, an average slope of the series of segments, and respective diameters of one or more segments of the series of segments.

In addition to the above features, the system according to this aspect of the presently disclosed subject matter can comprise one or more of features (i) to (vii) listed below, in any desired combination or permutation which is technically possible:

(i) the metric of obstruction is in accordance with a ratio between:

a) an effective average flow velocity; and

b) an engineered average flow velocity,

and the effective average flow velocity is in accordance with the time of traversal divided by the total length of the series of infrastructure segments.

(ii) the metric of obstruction is in accordance with a ratio between:

an effective hydraulic radius of the series of segments, and

an engineered hydraulic radius of the series of segments,

and the effective hydraulic radius is in accordance with:

$$\text{EffectiveAverageVelocity} = \frac{1}{n} R^{2/3}_{FluidDepth} Slope^{1/2}$$

wherein Slope is the average slope, $R_{FluidDepth}$ is the effective hydraulic radius, and

wherein EffectiveAverageVelocity is in accordance with the time-of-traversal divided by the total length of the series of infrastructure segments.

(iii) the data informative of the fluid depth is received from a surface-contact fluid depth sensor located in the series of infrastructure segments.

(iv) the data informative of the fluid depth is a sensor-to-surface distance received from a surface-remote fluid depth sensor located in the series of infrastructure segments.

(v) the processing circuitry is further configured to:

a. receive, from a first fluid sensor located in the series of infrastructure segments, first data indicative of one or more first fluid characteristics associated with the fluid traversing a first infrastructure location at a first timestamp;

b. identify a first fluid characteristic signal from, at least, the first fluid characteristics,

c. receive, from a second fluid sensor located in the series of infrastructure segments, second data indicative of one or more second fluid characteristics associated with the fluid traversing a second infrastructure location at a second timestamp;

d. identify a second fluid characteristic signal from, at least, the second fluid characteristics;

e. responsive to correlation of the second fluid characteristic signal with the first fluid characteristic signal: calculate the time-of-traversal, in accordance with, at least: the first timestamp, the second timestamp, and a distance between the first infrastructure location and the second infrastructure location.

(vi) at least one of the fluid sensors is a surface-contact fluid sensor.

(vii) at least one of the fluid sensors is a surface-remote fluid sensor.

According to another aspect of the presently disclosed subject matter there is provided a computer-implemented method of determining a metric of obstruction of a series of infrastructure segments transporting a fluid, the series comprising one or more segments, the method comprising:

a) obtaining:

a. data informative of a fluid depth in a segment of the series of infrastructure segments, and

b. data informative of a time-of-traversal of the fluid through the series of segments; and

b) calculating the metric of obstruction in accordance with, at least:

a. the obtained fluid depth;

b. the obtained time-of-traversal; and

c. a total length of the series of segments, an average slope of the series of segments, and respective diameters of one or more segments of the series of segments.

This aspect of the disclosed subject matter can further optionally comprise one or more of features (i) to (vii) listed above with respect to the system, mutatis mutandis, in any desired combination or permutation which is technically possible.

According to another aspect of the presently disclosed subject matter there is provided a computer program product comprising a computer readable non-transitory storage medium containing program instructions, which program instructions when read by a processor, cause the processing circuitry to perform a method of determining a metric of obstruction of a series of infrastructure segments transporting a fluid, the series comprising one or more segments, the method comprising:

a) obtaining:

a. data informative of a fluid depth in a segment of the series of infrastructure segments, and

b. data informative of a time-of-traversal of the fluid through the series of segments; and

b) calculating the metric of obstruction in accordance with, at least:

a. the obtained fluid depth;

b. the obtained time-of-traversal; and

c. a total length of the series of segments, an average slope of the series of segments, and respective diameters of one or more segments of the series of segments.

This aspect of the disclosed subject matter can further optionally comprise one or more of features (i) to (vii) listed above with respect to the system, mutatis mutandis, in any desired combination or permutation which is technically possible.

**BRIEF DESCRIPTION OF THE DRAWINGS**

In order to understand the invention and to see how it can be carried out in practice, embodiments will be described, by way of non-limiting examples, with reference to the accompanying drawings, in which:

**Fig. 1,** illustrates an example wastewater transport system utilizing an infrastructure traversal measurement system, in accordance with some embodiments of the presently disclosed subject matter;

**Fig. 2,** illustrates a logical block diagram of an example flow analysis system, in accordance with some embodiments of the presently disclosed subject matter;

**Fig. 3A,** illustrates an example series of sensed fluid characteristics exhibiting an example detectable threshold fluid characteristic signal, in accordance with some embodiments of the presently disclosed subject matter;

**Fig. 3B,** illustrates an example series of sensed fluid characteristics exhibiting a detectable peak value fluid characteristic signal, in accordance with some embodiments of the presently disclosed subject matter;

**Fig. 3C,** illustrates an example series of sensed fluid characteristics exhibiting a discrete event, in accordance with some embodiments of the presently disclosed subject matter;

**Fig. 4,** illustrates an example method of calculating a time of traversal of a fluid through an infrastructure, in accordance with some embodiments of the presently disclosed subject matter;

**Figs. 5A** illustrates an example high-viscosity type of obstruction which can occur in wastewater transport infrastructure, in accordance with some embodiments of the presently disclosed subject matter; and

**Figs. 5B** illustrates an example type of obstruction which can occur in wastewater transport infrastructure, in accordance with some embodiments of the presently disclosed subject matter;

Figs. 5C illustrates an example narrowing type of obstruction which can occur in wastewater transport infrastructure, in accordance with some embodiments of the presently disclosed subject matter; and

Fig. 6 illustrates a flow diagram of an example method of calculating a degree of flow obstruction in a wastewater infrastructure, in accordance with some embodiments of the presently disclosed subject matter.

## DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "computing", "comparing", "determining", "calculating", "receiving", "providing", "obtaining", "emulating" or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, the processor, mitigation unit, and inspection unit therein disclosed in the present application.

The terms "non-transitory memory" and "non-transitory storage medium" used herein should be expansively construed to cover any volatile or non-volatile computer memory suitable to the presently disclosed subject matter.

The operations in accordance with the teachings herein may be performed by a computer specially constructed for the desired purposes or by a general-purpose computer specially configured for the desired purpose by a computer program stored in a non-transitory computer-readable storage medium.

Embodiments of the presently disclosed subject matter are not described with reference to any particular programming language. It will be appreciated that a variety of programming languages may be used to implement the teachings of the presently disclosed subject matter as described herein.

Operators seek information about the load, performance, and hydraulic behavior of wastewater transport infrastructure. The time of traversal of a portion or entirety of the infrastructure (i.e. the duration of time that it takes for fluid to travel from a starting point to a finishing point) is one such parameter of interest. The time of traversal of a portion or entirety of an infrastructure can depend on various transitory factors such as wastewater load, blockages, etc.

Additionally, average velocity is another metric of interest to infrastructure operators for performance monitoring and maintenance purposes. Time of traversal can be utilized to determine the average velocity over the segment.

In the past, operators have been able to utilize a sensor to determine "stationary velocity" at a particular point in the infrastructure. However, flow velocity can change as the flow passes thru the infrastructure. To detect time-of-traversal, operators have used mechanisms such as dropping an orange into an access channel and measuring the time until it appears downstream.

In some embodiments of the presently disclosed subject matter, particular types of wastewater content sensors are placed in the wastewater infrastructure. An analysis system can then process data from these sensors to identify distinct signals in the wastewater as the wastewater flows from upstream to downstream and determine a time-of-traversal.

In some embodiments of the presently disclosed subject matter, an analysis system can further utilize time-of-traversal data to determine a metric of extent of obstruction in - for example - specific portions of the infrastructure.

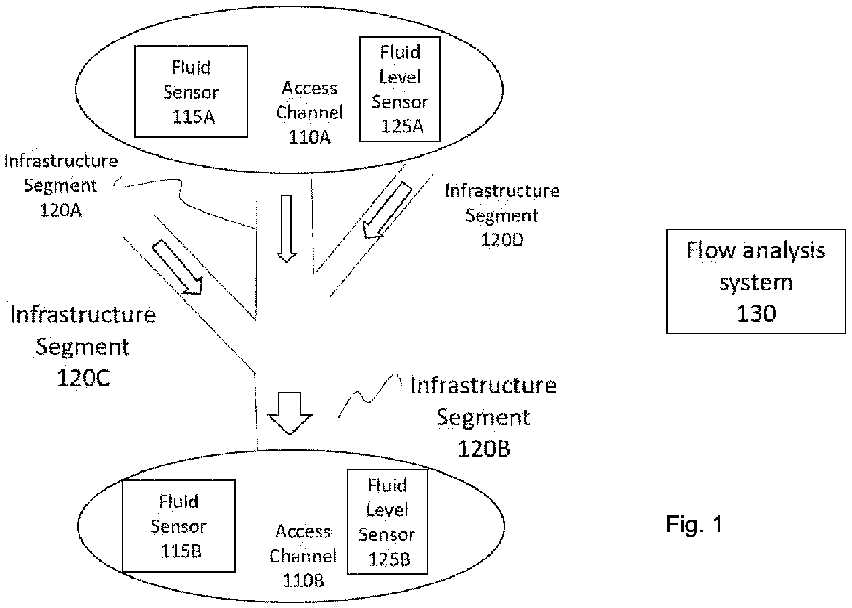

Attention is now directed to **Fig. 1,** which illustrates an example wastewater transport system utilizing an infrastructure traversal measurement system, in accordance with some embodiments of the presently disclosed subject matter.

Infrastructure segments **120A 120B** can be pipes for transporting wastewater. In the example illustrated in **Fig. 1,** arrows illustrate the direction of the wastewater flow from access channel **110A.** Infrastructure segment **120A** is shown as narrower than Infrastructure segment **120B,** and additional infrastructure segments **120C 120D** bring wastewater into infrastructure segment **120B** for further transport downstream.

Access channels **110A 110B** can be manholes or another suitable mechanism of accessing the infrastructure segment **120A** and infrastructure segment **120B** respectively.

Fluid sensor **115A** and fluid level sensor **125A** can be mounted in access channel **110A** in a position suitable for monitoring the wastewater flow. Fluid sensor **115B** and Fluid level sensor **125B** can be mounted in access channel **110B** in a position suitable for monitoring the wastewater flow.

Fluid sensor **115A** can be a type of fluid monitor suitable for detecting e.g. compositional characteristics or behavioral characteristics of the fluid. Fluid sensor **115A** can, for example, provide an updated reading of fluid characteristics after a particular time interval (e.g. 2 seconds) has passed.

In some embodiments, fluid sensor **115A 115B** is a surface-remote sensor that detects fluid characteristics by performing machine learning classification or regression on spectral emission signature data emitted by the wastewater. In some such embodiments, Fluid sensor **115A** can detect fluid characteristics that are derivative of one or more compositional characteristics, behavioral characteristics or other characteristics. An example of such a sensor is described in United States Patent Application 17/701,291 "Non-contact monitoring of fluid characteristics in wastewater transport systems",

In some embodiments, fluid sensor **115A 115B** is a surface-contact sensor that is located at the surface or immersed in the fluid, and detects fluid characteristics such as pH, electroconductivity, salinity, temperature etc.

Fluid level sensor **125A 125B** can be a type of fluid level sensor suitable for detecting the depth of wastewater within infrastructure segments **120A 120B** at the locations of the access channels **110A 110B.** For example: fluid level sensor **125A 125B** can be a surface-contact fluid level sensor which determines fluid depth while stationed on or immersed in the fluid. Alternatively: fluid level sensor **125A 125B** can be a surface-remote fluid level sensor which resides above the surface and determines sensor-to-surface distance, which can indicate fluid depth.

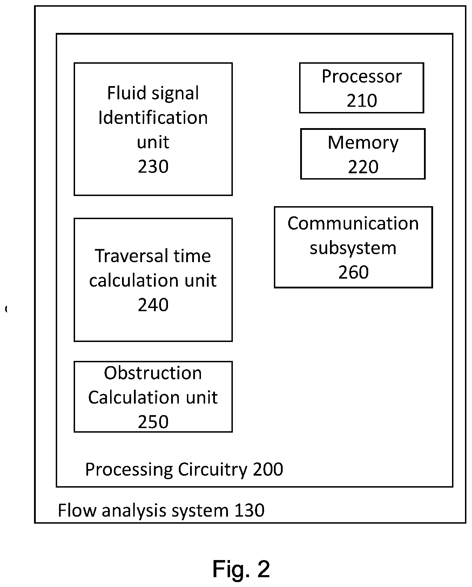

Flow analysis system **130** can be a local or remotely located computer system which receives data from e.g. fluid sensor **115A 115B** and fluid level sensor **125A 125B** via a communication channel (e.g. a cellular communication link (not shown)). Flow analysis system **130** is described in more detail below with reference to **Fig. 2.**

Attention is now directed to **Fig. 2,** which illustrates a logical block diagram of an example flow analysis system, in accordance with some embodiments of the presently disclosed subject matter.

Flow analysis system **130** can include a processing circuitry **200.** Processing circuitry **200** can include a processor **210** and a memory **220.**

Processor **210** can be a suitable hardware-based electronic device with data processing capabilities, such as, for example, a general purpose processor, digital signal processor (DSP), a specialized Application Specific Integrated Circuit (ASIC), one or more cores in a multicore processor etc. Processor **210** can also consist, for example, of multiple processors, multiple ASICs, virtual processors, combinations thereof etc.

Memory **220** can be, for example, a suitable kind of volatile and/or non-volatile storage, and can include, for example, a single physical memory component or a plurality of physical memory components. Memory **220** can also include virtual memory. Memory **220** can be configured to, for example, store various data used in computation.

Processing circuitry **200** can be configured to execute several functional modules in accordance with computer-readable instructions implemented on a non-transitory computer-readable storage medium. Such functional modules are referred to hereinafter as comprised in the processing circuitry. These modules can include, for example, fluid signal identification unit **230,** traversal time calculation unit **240,** obstruction calculation unit **250,** and communication subsystem **260.**

Fluid signal identification unit **230** can receive fluid characteristic data from e.g. fluid sensors **115A 115B** via communication subsystem **240.**

The term "fluid characteristic signal" can refer to an exceptional change in the composition, behavior, or derivative characteristics of the wastewater. In this context, "derivative characteristics" includes assessments that are based on multiple compositional and/or behavioral characteristics of the wastewater, machine learning classifications etc.

In some cases, the exceptional change in the wastewater can be successively detected at multiple locations in the infrastructure as the wastewater flows downstream - even in the circumstance of changing composition of the wastewater over time, and even in the presence of additional flows entering the infrastructure.

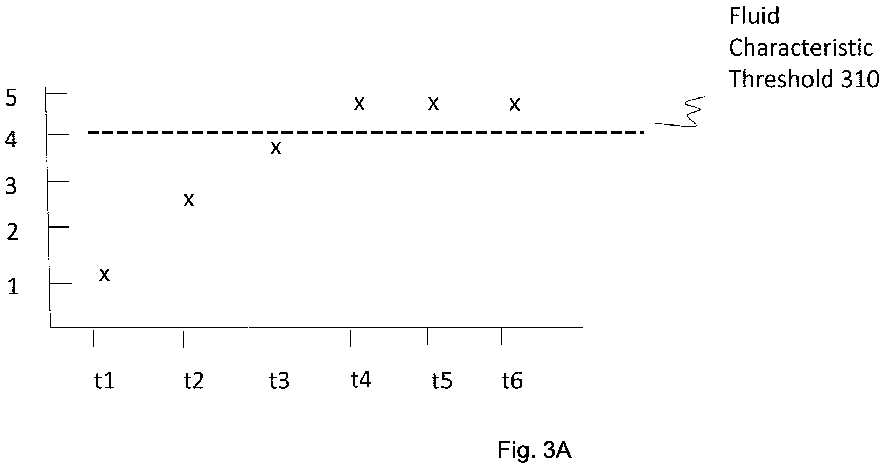

Fluid signal identification unit **230** can perform analysis on received fluid characteristic data received from fluid sensors **125A 125B,** and can identify fluid characteristic signals. Detailed examples of fluid characteristic signals that can be detected are described in detail below with reference to **Figs. 3A-3C.**

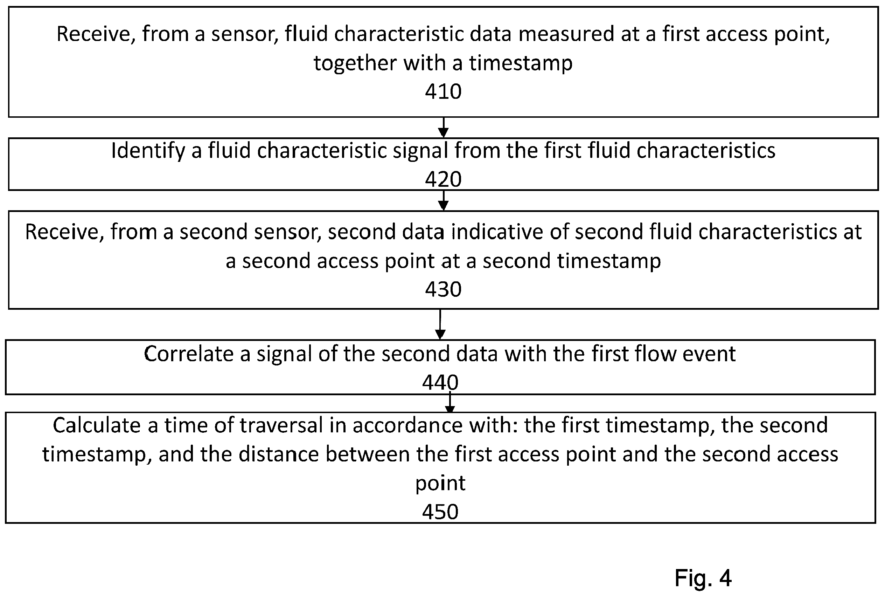

Traversal time calculation unit **240** can receive data associated with fluid characteristic signals detected at different fluid sensors **115A 115B,** and can utilize these to calculate contemporaneous times of traversal of the infrastructure. These calculations are described in detail below with reference to **Fig. 4.**

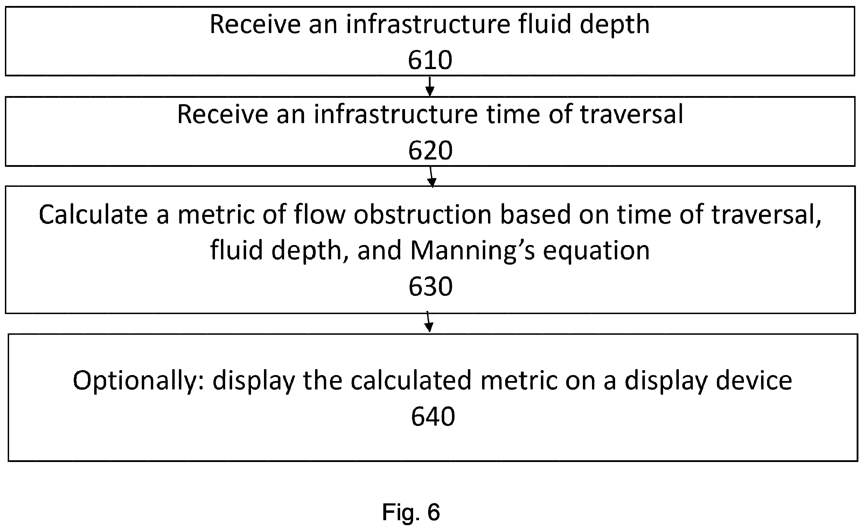

Obstruction calculation unit **250** can receive fluid level data from e.g. fluid level sensors **125A 125B,** as well as infrastructure time-of- traversal data from e.g. traversal time calculation unit **240,** and can then determine the presence and extent of blockages in the infrastructure, as described in detail below with reference to Figs. 6A-6C and 7.

It is noted that some embodiments of flow analysis system **130** do not determine the presence and extent of blockages in the infrastructure. In such embodiments - for example - obstruction calculation unit **250** can be absent.

It is noted that some embodiments of flow analysis system **130** can utilize externally provided infrastructure traversal time data to determine the presence and extent of blockages in the infrastructure. In such embodiments - for example - traversal time calculation unit **240** can be absent.

It is noted that the teachings of the presently disclosed subject matter are not bound by the system described with reference to **Fig. 2.** Equivalent and/or modified functionality can be consolidated or divided in another manner and can be implemented in any appropriate combination of software and/or hardware and executed on a suitable device. The flow analysis system **(130)** can be a standalone entity, or integrated, fully or partly, with other entities.

Attention is now directed to **Fig. 3A,** which illustrates an example series of sensed fluid characteristics exhibiting an example detectable threshold fluid characteristic signal, in accordance with some embodiments of the presently disclosed subject matter.

Fig. 3A illustrates a graph wherein the x-axis represents timestamps (labelled tl, t2 etc.) at which a fluid sensor **115A 115B** located in a wastewater transport infrastructure received discrete measurements of a fluid characteristic. The y-axis represents corresponding sensed values of the fluid characteristic. The characteristic measured can be any compositional, behavioral, derivative, or other fluid characteristic. For example: the measured characteristic could be pH (e.g. as measured by a contact sensor), chemical oxygen demand (COD e.g. as measured by a remote sensor performing machine learning classification of spectral emission signatures), or any other fluid characteristic. The time between measurements can be any suitable fied or variable value (e.g. 2 seconds).

In some wastewater network deployments, a sensor reading in which a value of a fluid characteristic meets a particular threshold (e.g. t4 in **Fig. 3A)** can constitute a fluid characteristic signal. That is to say: in some examples a particular fluid characteristic meeting a particular threshold can be an exceptional event that can then be detected at one or more additional points in the infrastructure (subject to a fluid propagation delay).

In some embodiments, a single sensor reading in which a value of a fluid characteristic meets a particular threshold can constitute a fluid characteristic signal. In some embodiments, some other number of sensor readings in which a value of a fluid characteristic meets a particular threshold constitutes a fluid characteristic signal.

In some embodiments, two or more different fluid characteristics simultaneously reaching respective thresholds can constitute a fluid characteristic signal.

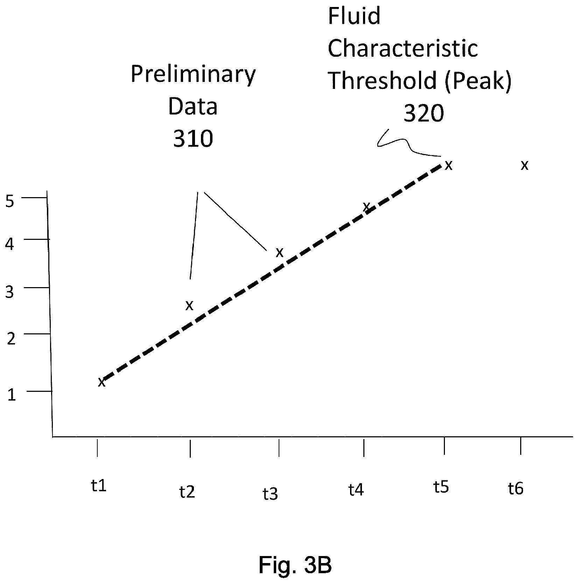

Attention is now directed to **Fig. 3B,** which illustrates an example series of sensed fluid characteristics exhibiting a detectable peak value fluid characteristic signal, in accordance with some embodiments of the presently disclosed subject matter.

In **Fig. 3B,** the values of a particular fluid characteristic (e.g. pH, COD, etc.) increase from t1 to t5. In some embodiments, a series of values a fluid characteristic meeting a threshold rate of change (whether a positive or negative threshold) can constitute a fluid characteristic signal.

In some embodiments, two or more different fluid characteristics simultaneously changing at rates meeting respective thresholds can constitute a fluid characteristic signal.

In some embodiments, a fluid characteristic increasing at a certain threshold rate and then subsequently declining at a certain threshold rate (i.e. "peak" followed by a "valley") can constitute a fluid characteristic signal.

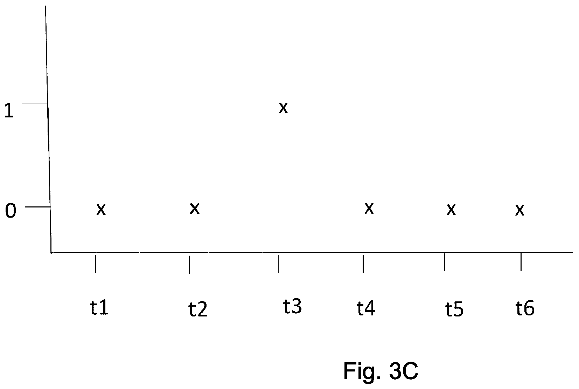

Attention is now directed to **Fig. 3C,** which illustrates an example series of sensed fluid characteristics exhibiting a discrete event, in accordance with some embodiments of the presently disclosed subject matter.

Fig 3C illustrates a series of readings of a boolean indicator fluid characteristic (for example: presence of a pollution event, as determined by a classification of a machine learning model based on spectral emission signatures). Detection of a pollution event or other boolean indicator fluid characteristic can constitute a fluid characteristic signal. In some cases, the pollution event or other boolean indicator fluid characteristic can then be subsequently detected at multiple points in the infrastructure (subject to a fluid propagation delay).

Attention is now directed to **Fig. 4,** which illustrates an example method of calculating a time of traversal of a fluid through an infrastructure, in accordance with some embodiments of the presently disclosed subject matter.

Processing circuitry **200** (for example: fluid signal identification unit **230)** can receive **(410)** from e.g. upstream fluid sensor **115A** (e.g. via communication subsystem **260),** data indicative of fluid characteristics at an access channel **110B** in wastewater transport infrastructure. The data can be accompanied by a timestamp indicating when the measurement of the fluid sensor **115A** occurred.

As described in detail above, the fluid characteristic can pertain to the composition or behavior of the fluid, or be a derivative characteristic calculated based on composition, behavior, or other characteristics.

Processing circuitry **200** (for example: fluid signal identification unit **230)** can next identify **(420)** a fluid characteristic signal from the data indicative of fluid characteristics.

In various embodiments and deployment examples, processing circuitry 200 (for example: fluid signal identification unit **230)** can identify many different kinds of fluid characteristic signals, including the examples described in detail above, with reference to **Figs. 3A-3C.**

By way of non-limiting examples, the identified fluid characteristic signal can be:

- one or more fluid characteristic values meeting respective upper threshold values and/or lower threshold values.

- one or more fluid characteristic values changing at respective rates meeting fluid characteristic change rate threshold.

- one or more boolean indicator fluid characteristic values having a particular Boolean value

- combinations of the above

At a later time - for example - processing circuitry **200** (for example: fluid signal identification unit **230**) can receive **(430)** from e.g. downstream fluid sensor **115B** (e.g. via communication subsystem **260**), data indicative of fluid characteristics at an access channel **110B** in wastewater transport infrastructure. The data can be accompanied by a timestamp indicating when the measurement of the fluid sensor **115B** occurred.

Processing circuitry **200** (for example: fluid signal identification unit **230**) can attempt to correlate **440** the fluid characteristic signal identified in the data received from upstream fluid sensor **115A** with a fluid characteristic signal identified in earlier data received from downstream fluid sensor **115B**.

Correlating the fluid characteristic signals can include processing circuitry **200** (for example: fluid signal identification unit **230**) determining that second fluid characteristic signal matches the same criteria as the first fluid character signal (e.g. same characteristics meet same thresholds, exhibit the same peaks, or the same Boolean property etc.) In some embodiments, processing circuitry **200** (for example: fluid signal identification unit **230**) utilizes a maximum fluid propagation delay value to ensure that it does not correlate a second fluid characteristic signal with a first fluid characteristic signal that is older than some maximum physically plausible delay.

Upon successful correlation of a downstream fluid characteristic signal with an upstream fluid characteristic signal, processing circuitry **200** (for example: traversal time calculation unit **240**) can calculate **450** a time of traversal in accordance with: the timestamp associated with the upstream data, the timestamp associated with the downstream data, and a physical distance between the first access channel **110A** and the second access channel **110B**. By way of nonlimiting example, the following formula can be utilized:

$$TimeOfTraversal = (SecondTimestamp - FirstTimestamp) / Distance$$

It is noted that the teachings of the presently disclosed subject matter are not bound by the flow diagrams illustrated in **Fig. 4,** and that in some cases the illustrated operations may occur concurrently or out of the illustrated order (for example: operations **420** and **430**). It is also noted that whilst the flow chart is described with reference to elements of the system of **Figs. 1-2,** this is by no means binding, and the operations can be performed by elements other than those described herein.

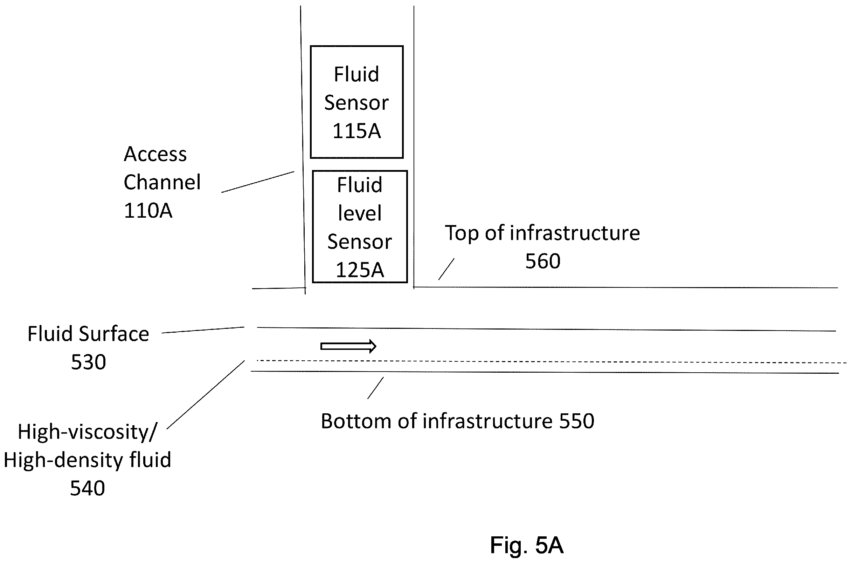

Attention is now drawn to **Figs. 5A-5C,** which illustrate example types of obstructions which can occur in wastewater transport infrastructure, in accordance with some embodiments of the presently disclosed subject matter.

In **Fig. 5A,** fluid sensor **115A** and fluid level sensor **125A** are suspended in access channel **110A**. Fluid surface **530** does not reach the top of the infrastructure (e.g. the top of the pipe). In this case, however, there is a high-viscosity/high-density fluid **540** residing above bottom of infrastructure **550**. The high-viscosity/high-density fluid **540** can function as an obstacle and reduce the effective diameter of the infrastructure and can reduce the fluid transport capability.

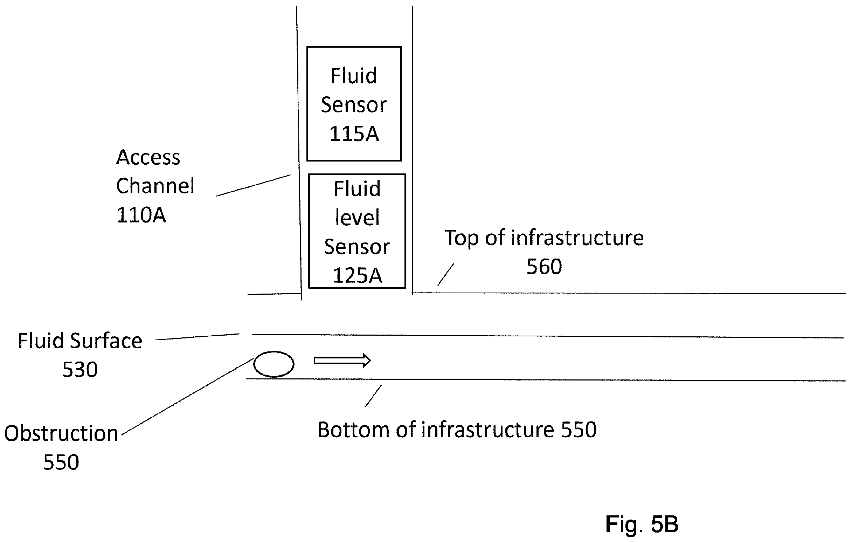

In **Fig. 5B,** there is a simple obstruction **550**.

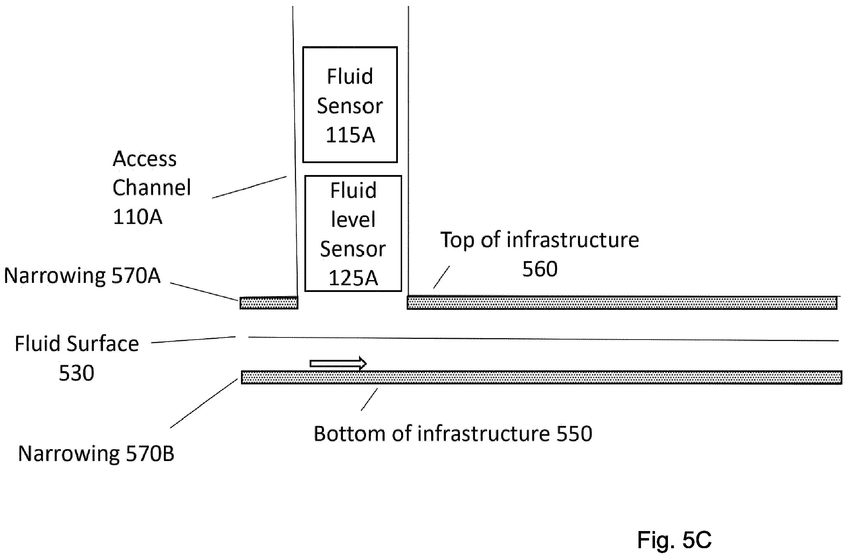

**Fig. 5C** illustrates a deployment where narrowings **570A** and **570B** have accumulated on the top of infrastructure **550** and the bottom of the infrastructure **550**. Narrowings **570A** and **570B** can be - for example - accumulations of lipids known as "fatbergs", or other types of residue which can result in e.g. reduced effective pipe diameter.

Attention is now directed to **Fig. 6,** which illustrates a flow diagram of an example method of calculating a degree of flow obstruction in a wastewater infrastructure, in accordance with some embodiments of the presently disclosed subject matter.

In the ensuing description, the term "segment" includes an infrastructure component of a particular length which has a particular shape and slope (for example a circular pipe of a particular diameter installed at a particular slope). An infrastructure "section" can refer to a serially connected series of one or more segments. The term "pipe" includes a segment of wastewater transport infrastructure, regardless of its specific shape or material of construction.

Processing circuitry **200** (for example: obstruction calculation unit **250**) can receive **(610)** data indicative of a fluid depth measured in a segment (e.g. a pipe or channel) of the wastewater transport infrastructure. By way of non-limiting example, processing circuitry **200** (for example: obstruction calculation unit **250**) can receive a fluid depth measured by downstream fluid level sensor **125B** (e.g. via communication subsystem **260**).

In some embodiments, processing circuitry **200** (for example: obstruction calculation unit **250**) receives not the fluid depth itself, but rather receives the distance from fluid level sensor **115A** to the fluid surface. In some such embodiments, processing circuitry **200** (for example: obstruction calculation unit **250**) then computes the fluid depth by subtracting the sensor-to-surface distance from the pipe diameter.

Processing Circuitry **200** (for example: obstruction calculation unit **250**) can receive **(620)** data indicative of a time-of-traversal of the fluid from a first location in the infrastructure (e.g. access channel **110A**) to a second location (e.g. access channel **110B**). This time of traversal can, by way of non-limiting example, be determined by sensor-based methods described hereinabove.

Manning's equation enables determination of a "theoretical" or "engineered" flow velocity in an infrastructure for a particular fluid depth, based on the diameter of the pipe (or diameters of pipes in a series of pipes), and the slope of the pipe (or average slope of the pipes). Manning's equation and its applications are described in e.g.: Akgiray, Ömer. (2005). "Explicit solutions of the Manning equation for partially filled circular pipes". Canadian Journal of Civil Engineering. 32. 490-499.

It Is thus noted that comparing the "ideal" flow velocity to the actual flow velocity (as derived for example from the received time of traversal) can be indicative the extent to which the infrastructure suffers from obstructions (for example: obstructions of the sort illustrated in **Figs. 5A-5C).**

The term "hydraulic radius" can refer to the cross-sectional area of the channel divided by the wetted perimeter cf. https://en.wikipedia.org/wiki/Hydraulic_diameter. Thus, comparing the effective hydraulic radius (as derived for example from the received time of traversal) to the engineered hydraulic radius can be another indication of the extent of obstructions in the infrastructure.

It will be clear to one skilled in the art that various other metrics of obstruction which utilize the received fluid depth and time of traversal can be constructed.

More generally: processing circuitry **200** (for example: obstruction calculation unit **250)** can calculate **(630)** a metric of flow obstruction based on:

    a) the time of traversal of all or part of the infrastructure
    b) the fluid depth
    c) information known about the topology of the infrastructure:

        -   the length of the traversed infrastructure
        -   the slope of the pipe (in a case of a single pipe) or average slope of the pipes (in a case of a series of pipes)
        -   the engineered diameter of the pipe (in a case of a single pipe) or of one or more of the pipes (in a case of a series of pipes)

By way of nonlimiting example, processing circuitry **200** (for example: obstruction calculation unit **250)** can determine effective velocity in accordance with the formula:

$$EffectiveAverageVelocity = TimeOfTraversal/LengthOfTraversedInfrastructure$$

i.e. the velocity results from i) the measured time of traversal of the fluid in the infrastructure, and ii) the length of the traversed pipe(s) i.e. the distance of traversal in the infrastructure.

By way of nonlimiting example, processing circuitry **200** (for example: obstruction calculation unit **250)** can compute the engineered average flow velocity for a pipe as follows (cf. Akgiray op. cit.):

$$EngineeredAverageVelocity = \frac{1}{n} R^{2/3}_{FluidDepth} Slope^{1/2}$$

where $R_{FluidDepth}$ (termed the hydraulic radius), is calculated by:

$$R_{FluidDepth} = \frac{Diameter}{4} \left( \frac{\theta - \sin\theta}{\theta} \right)$$

and where:

$$\theta = 2\cos^{-1}\left( 1 - \left( \frac{2 * FluidDepth}{Diameter} \right) \right)$$

In some embodiments, processing circuitry **200** (for example: obstruction calculation unit **250)** then computes a metric based on the effective average velocity and the engineered average velocity. For example: the metric can be the ratio of the effective average velocity to the engineered average velocity.

In some other embodiments, processing circuitry **200** (for example: obstruction calculation unit **250)** calculates a metric of infrastructure obstruction in accordance with, at least, the effective and the engineered hydraulic radius values.

By way of nonlimiting example, processing circuitry **200** (for example: obstruction calculation unit **250**) can compute the engineered hydraulic radius for a pipe (based on the known pipe diameter and the measure fluid depth) in accordance with the formula described above.

To determine effective hydraulic radius, processing circuitry **200** (for example: obstruction calculation unit **250**) can first compute the effective velocity e.g. as described above.

Processing circuitry **200** (for example: obstruction calculation unit **250**) can then compute the actual effective hydraulic radius in accordance with a solution to the equation:

$$EffectiveAverageVelocity = \frac{1}{n} R_{FluidDepth}^{2/3} Slope^{1/2}$$

(where $R_{FluidDepth}$ is the effective hydraulic radius)

Processing circuitry **200** (for example: obstruction calculation unit **250**) can then compute a metric of infrastructure obstruction from the effective hydraulic radius and the engineered hydraulic radius (e.g. the ratio between effective hydraulic radius and the engineered hydraulic radius).

Processing circuitry **200** (for example: obstruction calculation unit **250**) can optionally display **(640)** the calculated metric on a display device.

It is noted that the teachings of the presently disclosed subject matter are not bound by the flow diagrams illustrated in **Fig.** 6, and that in some cases the illustrated operations may occur concurrently or out of the illustrated order (for example: operations **610** and **620**). It is also noted that whilst the flow chart is described with reference to elements of the system of **Figs. 1-2,** this is by no means binding, and the operations can be performed by elements other than those described herein.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

**Claims**

1. A system of measuring a time of fluid traversal of an infrastructure, the system comprising a processing circuitry, the processing circuitry comprising a processor and memory, and being configured to:

   a) receive first data indicative of one or more first fluid characteristics associated with the fluid traversing a first infrastructure location at a first timestamp;
   b) identify a first fluid characteristic signal from, at least, the first fluid characteristics,
   c) receive second data indicative of one or more second fluid characteristics associated with the fluid traversing a second infrastructure location at a second timestamp;
   d) identify a second fluid characteristic signal from, at least, the second fluid characteristics; and
   e) responsive to correlation of the second fluid characteristic signal with the first fluid characteristic signal: calculate a time of traversal, in accordance with, at least: the first timestamp, the second timestamp, and a distance between the first infrastructure location and the second infrastructure location.

2. The system of claim 1, wherein the one or more of the first fluid characteristics are derivative of data from a sensor in contact with the fluid.

3. The system of claim 1, wherein the one or more of the first fluid characteristics are derivative of data from a non-contact sensor.

4. The system of claim 1, wherein the one or more of the first fluid characteristics are derivative of a machine learning classification of a spectral emission signature of the fluid.

5. The system of claim 1, wherein the one or more of the first fluid characteristics are derivative of a machine learning regression of a spectral emission signature of the fluid.

6. The system of claim 1, wherein the identifying the first fluid characteristic signal comprises determining that one or more of the first fluid characteristics meets a respective value.

7. The system of claim 6, wherein at least one respective value is a boolean indicator of a fluid characteristic.

8. The system of claim 6, wherein at least one respective value is a respective fluid characteristic threshold.

9. The system of claim 1, wherein the identifying the first fluid characteristic signal comprises detecting that a rate of change of a series of received values of a fluid characteristic, wherein the series includes one of the first fluid characteristics, meets a fluid characteristic change rate threshold.

10. A processing circuitry-based method of measuring a time of fluid traversal of an infrastructure, the processing circuitry comprising a processor and memory, the method comprising:

a) receiving first data indicative of one or more first fluid characteristics associated with the fluid traversing a first infrastructure location at a first timestamp;
b) identifying a first fluid characteristic signal from, at least, the first fluid characteristics,
c) receiving second data indicative of one or more second fluid characteristics associated with the fluid traversing a second infrastructure location at a second timestamp;
d) identifying a second fluid characteristic signal from, at least, the second fluid characteristics; and
e) responsive to correlation of the second fluid characteristic signal with the first fluid characteristic signal: calculating a time of traversal, in accordance with, at least: the first timestamp, the second timestamp, and a distance between the first infrastructure location and the second infrastructure location.

11. A computer program product comprising a non-transitory computer readable storage medium retaining program instructions, which, when read by a processing circuitry, cause the processing circuitry to perform a computerized method of measuring a time of fluid traversal of an infrastructure, the method comprising:

a) receiving first data indicative of one or more first fluid characteristics associated with the fluid traversing a first infrastructure location at a first timestamp;
b) identifying a first fluid characteristic signal from, at least, the first fluid characteristics,
c) receiving second data indicative of one or more second fluid characteristics associated with the fluid traversing a second infrastructure location at a second timestamp;
d) identifying a second fluid characteristic signal from, at least, the second fluid characteristics; and
e) responsive to correlation of the second fluid characteristic signal with the first fluid characteristic signal: calculating a time of traversal, in accordance with, at least: the first timestamp, the second timestamp, and a distance between the first infrastructure location and the second infrastructure location.

Fig. 1

Fluid Sensor 115A

Access Channel 110A

Fluid Level Sensor 125A

Infrastructure Segment 120A

Infrastructure Segment 120D

Infrastructure Segment 120C

Infrastructure Segment 120B

Fluid Sensor 115B

Access Channel 110B

Fluid Level Sensor 125B

Flow analysis system 130

EP 4 321 845 A1

Fig. 2

Fig. 3A

Fig. 3B

EP 4 321 845 A1

1 ────

    x                                        x

0 ────    x           x                 x        x        x

          t1          t2          t3          t4          t5          t6

Fig. 3C

| Receive, from a sensor, fluid characteristic data measured at a first access point, together with a timestamp |
|---|
| 410 |

↓

| Identify a fluid characteristic signal from the first fluid characteristics |
|---|
| 420 |

↓

| Receive, from a second sensor, second data indicative of second fluid characteristics at a second access point at a second timestamp |
|---|
| 430 |

↓

| Correlate a signal of the second data with the first flow event |
|---|
| 440 |

↓

| Calculate a time of traversal in accordance with: the first timestamp, the second timestamp, and the distance between the first access point and the second access point |
|---|
| 450 |

Fig. 4

Fluid Sensor 115A

Fluid level Sensor 125A

Access Channel 110A

Top of infrastructure 560

Fluid Surface 530

High-viscosity/ High-density fluid 540

Bottom of infrastructure 550

Fig. 5A

Access
Channel
110A

Fluid
Sensor
115A

Fluid
level
Sensor
125A

Top of infrastructure
560

Fluid Surface
530

Obstruction
550

Bottom of infrastructure 550

Fig. 5B

Fig. 5C

EP 4 321 845 A1

| Receive an infrastructure fluid depth |
|---|
| 610 |

| Receive an infrastructure time of traversal |
|---|
| 620 |

| Calculate a metric of flow obstruction based on time of traversal, fluid depth, and Manning's equation |
|---|
| 630 |

| Optionally: display the calculated metric on a display device |
|---|
| 640 |

Fig. 6

Europäisches
Patentamt

European
Patent Office

Office européen
des brevets

# EUROPEAN SEARCH REPORT

Application Number

EP 23 18 9819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H04 138321 A (TOKIMEC INC) 12 May 1992 (1992-05-12) * paragraphs [0001] - [0003]; claim 1; figures 1-3, 5 * | 1-11 | INV. G01F1/002 G01F1/708 G01F1/712 E03F7/00 |
| X | US 2016/033313 A1 (MCKENNA SEAN A [IE] ET AL) 4 February 2016 (2016-02-04) * paragraphs [0001], [0016] - [0054]; figures 1-4 * | 1-11 | ADD. F17D5/00 G01F15/06 G01M1/00 |
| A | US 2021/088369 A1 (REDMOND DANIEL [US]) 25 March 2021 (2021-03-25) * paragraphs [0001] - [0008], [0021] - [0070]; claims 1-20; figures 1-10 * | 1-11 | |
| A | WO 2012/161716 A1 (HACH CO [US]; RICK DAVID LANGLEY [US]) 29 November 2012 (2012-11-29) * page 1, line 3 - page 5, line 17 * * page 6, line 12 - page 13, line 8; figures 1-4 * | 1-11 | |
| A | US 2017/294101 A1 (STETTLER ANYA ROSE [US] ET AL) 12 October 2017 (2017-10-12) * paragraphs [0001] - [0009], [0020] - [0102]; figures 1-7 * | 1-11 | TECHNICAL FIELDS SEARCHED (IPC) G01F E03F F17D G01M |
| A | US 2017/227391 A1 (FORSTER-KNIGHT ANDREW [AU] ET AL) 10 August 2017 (2017-08-10) * paragraphs [0001] - [0025], [0052] - [0069]; figures 1-7 * | 1-11 | |
| A | US 2009/250125 A1 (HOWITT IVAN [US]) 8 October 2009 (2009-10-08) * paragraphs [0002], [0004] - [0007], [0008] - [0049]; figures 1-9 * | 1-11 | |

The present search report has been drawn up for all claims

| Place of search | Date of completion of the search | Examiner |
|---|---|---|
| The Hague | 22 December 2023 | Feldhoff, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 9819

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2023

| Patent document cited in search report | | Publication date | Patent family member(s) | | Publication date |
|---|---|---|---|---|---|
| JP H04138321 | A | 12-05-1992 | NONE | | |
| US 2016033313 | A1 | 04-02-2016 | NONE | | |
| US 2021088369 | A1 | 25-03-2021 | US 2021088369 | A1 | 25-03-2021 |
| | | | WO 2021061956 | A1 | 01-04-2021 |
| WO 2012161716 | A1 | 29-11-2012 | NONE | | |
| US 2017294101 | A1 | 12-10-2017 | US 2017294101 | A1 | 12-10-2017 |
| | | | US 2019235130 | A1 | 01-08-2019 |
| US 2017227391 | A1 | 10-08-2017 | AU 2015311619 | A1 | 16-03-2017 |
| | | | CA 2958899 | A1 | 10-03-2016 |
| | | | CN 106796135 | A | 31-05-2017 |
| | | | DK 3194908 | T3 | 08-02-2021 |
| | | | EP 3194908 | A1 | 26-07-2017 |
| | | | NZ 630446 | A | 27-02-2015 |
| | | | NZ 729129 | A | 30-07-2021 |
| | | | US 2017227391 | A1 | 10-08-2017 |
| | | | WO 2016033653 | A1 | 10-03-2016 |
| US 2009250125 | A1 | 08-10-2009 | CA 2754418 | A1 | 10-09-2010 |
| | | | EP 2404151 | A1 | 11-01-2012 |
| | | | ES 2634910 | T3 | 29-09-2017 |
| | | | PL 2404151 | T3 | 31-10-2017 |
| | | | US 2009250125 | A1 | 08-10-2009 |
| | | | WO 2010101966 | A1 | 10-09-2010 |

**REFERENCES CITED IN THE DESCRIPTION**

**Patent documents cited in the description**

- US 701291